# EUROPÄISCHE PATENTSCHRIFT

(11) **EP 1 727 700 B1**
(45) Veröffentlichungstag und Bekanntmachung des Hinweises auf die Patenterteilung: **06.10.2010**
(21) Anmeldenummer: 05717075.5
(22) Anmeldetag: 16.03.2005
(51) Int. Cl.: B60W 30/16, B60W 30/18

(54) **EINSPURFAHRZEUG MIT EINER BREMSENREGELUNGSEINHEIT**
SINGLE-TRACK VEHICLE COMPRISING A BRAKE CONTROL UNIT
VEHICULE A VOIE UNIQUE COMPRENANT UNE UNITE DE REGULATION DE FREINAGE

(30) Priorität: 23.03.2004 DE 102004014176
(43) Veröffentlichungstag der Anmeldung: 06.12.2006
(73) Patentinhaber: Continental Teves AG & Co. oHG, 60488 Frankfurt am Main (DE)
(72) Erfinder: BAIJENS, Mark, 64546 (DE); STICHER, Thomas, 64297 Darmstadt (DE); HUTH, Oliver, 61476 Kronberg (DE); OHLY, Markus, 35423 Lich-Eberstadt (DE); MEURERS, Thomas, 60385 Frankfurt am Main (DE); WISCHER, Patrick, 65824 Schwalbach a. Ts. (DE)
(74) Vertreter: Graf, Ulrich
(86) Internationale Anmeldenummer: PCT/EP2005/051210
(87) Internationale Veröffentlichungsnummer: WO 2005/092659

(56) Entgegenhaltungen:
- EP-A- 1 065 089
- EP-A- 1 304 251
- DE-A1- 10 118 707
- DE-A1- 10 325 266
- DE-A1- 19 827 800
- DE-A1- 19 951 423
- US-A- 5 319 557

## Beschreibung

Die Erfindung betrifft ein Einspurfahrzeug mit einer Bremsenregelungseinheit.

Der nächstliegende Stand der Technik wird durch die DE 19827800 A1 dargestellt.

Aufgabe der Erfindung ist es, ein Einspurfahrzeug anzugeben, dass den Fahrzeugführer unterstützt bei seiner Steuerung der Bremsen und des Antriebsmotors des Fahrzeugs.

Die Aufgabe wird erfindungsgemäß durch die Merkmale des unabhängigen Patentanspruchs gelöst.

Besonders vorteilhafte Weiterbildungen und Ausgestaltungen der Erfindung sind in den abhängigen Unteransprüchen angegeben.

Die Aufgabe wird erfindungsgemäß dadurch gelöst, dass die Bremsenregelungseinheit Mittel zur aktiven Fahrerunterstützung durch eine aktive Änderung oder Begrenzung einer Fahrzeuggeschwindigkeit oder einer davon abgeleiteten Größe, insbesondere einer Fahrzeugbeschleunigung, aufweist.

Der Begriff "eine aktive Änderung oder Begrenzung einer Fahrzeuggeschwindigkeit oder einer davon abgeleiteten Größe" schließt ebenso eine Regelung bis zum Stillstand des Fahrzeug oder ein Anfahren aus einem FAhrzeugstillstand mit ein.

Der Begriff "Einspurfahrzeug" ist hier sehr weit gefasst. Darunter sind sämtliche Zweiräder, insbesondere Krafträder, aber ebenso Einspurfahrzeuge mit einem Beiwagen, wie Motorräder mit und ohne Beiwagen, oder andere dreirädrige Fahrzeuge mit einem Vorderrad und zwei Hinterrädern, wie "Trike", zu verstehen.

Der Begriff "Fahrzeugbeschleunigung" ist im Sinne der Erfindung sehr weit aufzufassen. Er bedeutet sowohl positive Beschleunigungen, somit ein Zunahme der Fahrzeuggeschwindigkeit. Andererseits sind unter dem Begriff aber auch negative Beschleunigungen, somit eine Verringerung der Fahrzeuggeschwindigkeit (Fahrzeugverzögerung) zu verstehen.

Nach der Erfindung ist es vorgesehen, dass die Bremsenregelungseinheit einen Fahrzeuggeschwindigkeitsregler aufweist, zur Einstellung einer gewünschten Fahrzeuggeschwindigkeit mittels eines automatischen Eingriffs in die Bremsregelung und/oder Antriebsmotorsteuerung.

Erfindungsgemäß ist es vorgesehen, dass die Bremsenregelungseinheit einen Fahrzeugbeschleunigungsregler aufweist, zur Einstellung einer gewünschten Fahrzeugbeschleunigung mittels eines automatischen Eingriffs in die Bremsregelung und/oder Antriebsmotorsteuerung.

Es ist nach der Erfindung vorgesehen, dass ein Longitudinal-Regler vorgesehen ist, zwecks Ansteuerung eines Fahrzeugbeschleunigungsreglers nach Maßgabe einer gewünschten Fahrzeugbeschleunigung, der aktuellen Fahrzeugbeschleunigung, des aktuellen Antriebsmotormoments und des aktuellen Bremsdrucks.

Nach der Erfindung ist es vorgesehen, dass die Mittel zur aktiven Fahrerunterstützung eine Einrichtung zur Folge- oder Abstandsregelung, wie ACC-System, ICC-System oder AICC-System, aufweisen.

Einrichtungen zur Folge- oder Abstandsregelung stellen mittels eines automatischen Bremseingriffs und/oder Eingriffs in die Antriebsmotorsteuerung eine vorgegebene Fahrzeuggeschwindigkeit ein. Die Folge- und Abstandsregelungen sind auch unter der Bezeichnung ACC (Adaptive-Cruise-Control, adaptive Fahrgeschwindigkeitsregelung) oder ICC (Intelligent-Cruise-Control, intelligente Fahrgeschwindigkeitsregelung) oder AICC (Autonomous-Intelligent-Cruise-Control, autonome intelligente Fahrgeschwindigkeitsregelung) bekannt.

Die Einstellung der bestimmten Fahrzeugverzögerung dient neben dem Komfort des Fahrers (Assistenzfunktion) insbesondere der Erhöhung der Fahrsicherheit (Unfallvermeidung).

Es ist nach der Erfindung vorgesehen, dass die Mittel zur aktiven Fahrerunterstützung eine Einrichtung zur Fahrzeuganfahrunterstützung und/oder Fahrzeuganhalteunterstützung aufweisen.

Erfindungsgemäße Einrichtungen zur Fahrzeuganfahrunterstützung sind insbesondere Fahrerassistenzsystem oder -funktionen, bei denen insbesondere ein Zurückrollen des Fahrzeugs nach einem Anhalten des Fahrzeugs verhindert wird, wie HSA (Hill-Start-Assist) oder AVH (Active-Vehicle-Hold).

Diese Einrichtungen werden vorzugsweise für Krafträder mit einem Beiwagen oder mit drei Rädern (Trike) eingesetzt. Denn in diesem Fall ist es nicht notwendig, dass der Fahrzeugführer das Fahrzeug im Stillstand selbst abstützt.

Bei Fahrzeugen mit einer Parkbremse sind darüber hinaus die Assistenzfunktion DBF (Dynamic-Brake-Function) und DAR (Drive-Away-Release) einsetzbar.

Einrichtungen zur Fahrzeughalteunterstützung sind insbesondere Fahrerassistenzsystem oder -funktionen, bei denen ein Halten des Fahrzeugs aktiv unterstützt wird, wie AVH (Active-Vehicle-Hold). Möglich ist beispielsweise ein Ausfahren einer Parkstütze bei einem Zweirad zur Fahrerunterstützung. Dies kann automatisch oder aber bedarfsgereicht durch den Fahrer, z.B. mittels Betätigung einer Betätigungseinrichtung, erfolgen.

Nach der Erfindung ist es vorgesehen, dass die Mittel zur aktiven Fahrerunterstützung eine Einrichtung zur Stop und Go Regelung aufweisen.

Einrichtungen zur Stop und Go Regelung, wie AVS (Active-Vehicle-Stop), ermöglichen einen für den Fahrer komfortablen automatischen Bremseingriff und/oder Eingriff in die Antriebsmotorsteuerung in Stop und Go Verkehrssituationen wie im Stadtverkehr. Auch eine besondere Regelung für Verkehrssituationen bei einem Stau sind darüber hinaus vorgesehen. Diese Einrichtungen werden für Krafträder mit einem Beiwagen oder drei Rädern (Trike) eingesetzt.

Diese Regelungen sind vorteilhaft als Komfortfunktionen im Rahmen einer Folge- und Abstandsregelungen vorgesehen. Sie erleichtern das Fahren in einem Stau, da der Fahrzeugführer sich im wesentlichen nur noch auf das Lenken des Fahrzeugs konzentrieren muss. Insbesondere im Fall von Einspurfahrzeugen (Krafträdern) wird dabei bei Unterschreiten einer Mindest-Fahrzeuggeschwindigkeit die automatische Regelung beendet, damit der Fahrer das Einspurfahrzeug sicher ausbalancieren kann. Ein Umkippen des Einspurfahrzeugs wird so verhindert.

Erfindungsgemäß ist es vorgesehen, dass die Mittel zur aktiven Fahrerunterstützung eine Einrichtung zur gefahrenpotentialabhängigen, automatischen Konditionierung des Bremssystems aufweisen.

Unter dem Begriff " Konditionierung" ist insbesondere ein Vorbefüllen der Radbremsen zu verstehen. Das bedeutet, die Bremsen werden aktiviert durch eine geringe, konstante Druckanforderung, damit die Lüftspiele zwischen Bremsscheibe und Bremsbelag überwunden werden. Das Vorbefüllen wird dann ausgeführt, wenn ein Gefahrenpotential als erkannt gilt, das darauf hinweist, dass eine starke Fahrzeugverzögerung, wie eine Notbremsung, in kurzer Zeit erforderlich sein wird (RAB, Ready-Alert-Brake).

Es ist nach der Erfindung vorgesehen, dass die Mittel zur aktiven Fahrerunterstützung eine Einrichtung zum automatischen "Trockenbremsen" von Bremsscheiben des Bremssystems aufweisen.

Der Begriff "Trockenbremsen" bedeutet, dass die Fahrzeugbremsen aktiviert werden durch eine geringe, konstante Druckanforderung, damit durch ein Anlegen des Bremsbelags an die Bremsscheibe ein auf der Bremsscheibe vorhandener Flüssigkeitsfilm (Regenwasser) entfernt wird (RBS, Rain-Brake-Support).

Es ist nach der Erfindung vorgesehen, dass die Mittel zur aktiven Fahrerunterstützung eine Einrichtung zur automatischen Fahrzeugverzögerung für eine Fahrzeugstabilisierung aufweisen.

Unter dem Begriff "automatischen Fahrzeugverzögerung für eine Fahrzeugstabilisierung" ist insbesondere ein Einbremsen des Fahrzeugs zu verstehen, wenn erkannt wird, dass das Fahrzeug eine Kurve befährt und eine zu große Fahrzeuggeschwindigkeit aufweist (UCL), damit das Fahrzeug nicht aus der Kurve herausgetragen wird.

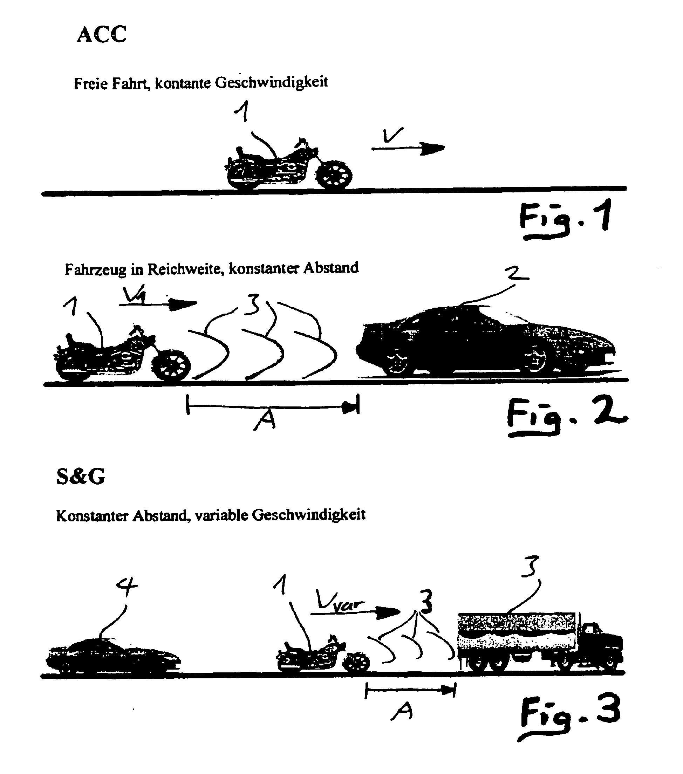

Die Erfindung wird anhand von 3 Abbildungen (Fig. 1 bis Fig. 3) näher erläutert.

Fig. 1 zeigt eine Fahrsituation eines ohne weitere Verkehrsteilnehmer im näheren Umfeld.

Das Einspurfahrzeugs 1 weist eine Bremsenregelungseinheit mit einem Longitudinal-Regler auf, der eine longitudinale Beschleunigungs-Anforderung intern oder von einer externen Einheit, wie einer ECU, hier z.B. eines ACC-Systems und einer Folgeregelung für eine Stop und Go Fahrsituation (Stop und Go-System, S&G), zugeführt. Der Regler berechnet dann eine korrespondierende Druck-Anforderung an ein BremsSystem oder eine korrespondierende Anforderung eines Motormoments an ein Motorsteuerungs-System, abhängig von der momentanen Situation, wie Beschleunigungs-Anforderung, aktuelle Beschleunigung, Fahrzeug-Geschwindigkeit oder Fahrbahn. Die Bremsen des Fahrzeugs werden gesteuert durch Setzen der internen Bremsdruckanforderung durch einen Bremsdruck-Regler, der eine Druckquelle zur hydraulischen Bremskraftverstärkung regelt.

In dieser Situation nach Fig. 1 kann der Fahrer durch eine Tempomatfunktion des ACC-Systems, d. h. eine automatische Fahrzeuggeschwindigkeitsregelung unterstützt werden, um eine von ihm gewünschte Fahrzeuggeschwindigkeit V ohne sein Zutun einzustellen und zu halten.

Fig. 2 zeigt eine Fahrsituation des Einspurfahrzeugs 1 mit einem vorausfahrenden Kraftfahrzeug 2 im näheren Umfeld, das durch eine Sensorsystem mittels Sensorsignalen 3, erfasst wird. In dieser Situation kann der Fahrer durch eine Abstandsregelungsfunktion, d. h. ein automatisches Einhalten eines ausreichenden Abstandes A zum Fahrzeug 2, unterstützt werden, wobei die Fahrzeuggeschwindigkeit V₁ des Fahrzeugs 1 automatisch begrenzt wird zur Einhaltung des Abstands A.

In der Fig. 3 ist eine Fahrsituation des Einspurfahrzeugs 1 in einer Stop und Go dargestellt, bei der ein vorausfahrendes Kraftfahrzeug 3 und ein hinterher fahrendes Fahrzeug 4 sich im näheren Umfeld befindet. Das vorausfahrendes Kraftfahrzeug 3 wird durch Sensorsignale 3 erfasst. In dieser Situation wird der Fahrer unterstützt, um einen ausreichenden Abstandes A zum Fahrzeug 3 einzuhalten, in dem die Fahrzeuggeschwindigkeit Vvar durch eine korrespondierende Druck-Anforderung an das BremsSystem und/oder eine korrespondierende Anforderung eines Motormoments an das Motorsteuerungs-System automatisch nach Maßgabe eines optimalen Abstandes A eingeregelt wird. In dieser Funktion kann das Fahrzeug 1 daher automatisch beschleunigt oder abgebremst werden. Damit wird der Fahrer bei seiner Fahrzeugführung einerseits entlastet und andererseits wird die Einhaltung eines ausreichenden Sicherheitsabstands zum Fahrzeug 3 bzw. 4 sichergestellt. Dies hilft, Auffahrunfälle zu vermeiden.

## Patentansprüche

1. Einspurfahrzeug mit einer Bremsenregelungseinheit, wobei die Bremsenregelungseinheit Mittel zur aktiven Fahrerunterstützung durch eine aktive Änderung oder Begrenzung einer Fahrzeuggeschwindigkeit oder einer davon abgeleiteten Größe, insbesondere einer Fahrzeugbeschleunigung, aufweist und die Bremsenregelungseinheit einen Fahrzeuggeschwindigkeitsregler zur Einstellung einer gewünschten Fahrzeuggeschwindigkeit mittels eines automatischen Eingriffs in die Bremsregelung und/oder Antriebsmotorsteuerung ausweist,
**dadurch gekennzeichnet,**
**dass** die Mittel zur aktiven Fahrerunterstützung eine Einrichtung zur Fahrzeuganfahrunterstützung und/oder Fahrzeuganhalteunterstützung aufweisen, die ein Zurückrollen des Fahrzeuges nach einem Anhalten des Einsspurfahrzeuges verhindern.

2. Einspurfahrzeug nach Anspruch 1,
**dadurch gekennzeichnet,**
**dass** die Bremsenregelungseinheit einen Fahrzeugbeschleunigungsregler aufweist, zur Einstellung einer gewünschten Fahrzeugbeschleunigung mittels eines automatischen Eingriffs in die Bremsregelung und/oder Antriebsmotorsteuerung.

3. Einspurfahrzeug nach Anspruch 1 oder 2,
**dadurch gekennzeichnet,**
**dass** ein Longitudinal-Regler vorgesehen ist, zwecks Ansteuerung eines Fahrzeugbeschleunigungsreglers nach Maßgabe einer gewünschten Fahrzeugbeschleunigung, der aktuellen Fahrzeugbeschleunigung, des aktuellen Antriebsmotormoments und des aktuellen Bremsdrucks.

4. Einspurfahrzeug nach einem der Ansprüche 1 bis 3,
**dadurch gekennzeichnet,**
**dass** die Mittel zur aktiven Fahrerunterstützunz eine Einrichtung zur Folge- oder Abstandsregelung, wie ACC-System, ICC-System oder AICC-System, aufweisen.

5. Einspurfahrzeug nach einem der Ansprüche 1 bis 4,
**dadurch gekennzeichnet,**
**dass** die Mittel zur aktiven Fahrerunterstützung eine Einrichtung zur Stop und Go Regelung aufweisen.

6. Einspurfahrzeug nach einem der Ansprüche 1 bis 5,
**dadurch gekennzeichnet,**
**dass** die Mittel zur aktiven Fahrerunterstützung eine Einrichtung zur gefahrenpotentialabhängigen, automatischen Konditionierung des Bremssystems aufweisen.

7. Einspurfahrzeug nach einem der Ansprüche 1 bis 6,
**dadurch gekennzeichnet,**
**dass** die Mittel zur aktiven Fahrerunterstützung eine Einrichtung zum automatischen "Trockenbremsen" vor Bremsscheiben des Bremssystems aufweisen.

8. Einspurfahrzeug nach einem der Ansprüche 1 bis 7,
**dadurch gekennzeichnet,**
**dass** die Mittel zur aktiven Fahrerunterstützung eine Einrichtung zur automatischen Fahrzeugverzögerung für eine Fahrzeugstabilisierung aufweisen.

## Claims

1. Single-track vehicle comprising a brake control unit, wherein the brake control unit has means for actively assisting the driver by actively changing or limiting a speed of the vehicle or a variable derived therefrom, in particular a vehicle acceleration, and the brake control unit has a vehicle speed controller for setting a desired vehicle speed by means of an automatic intervention into the brake closed-loop control and/or drive motor open-loop control,
**characterized**
**in that** the means for actively assisting the driver have a device for assisting starting of the vehicle and/or assisting stopping of the vehicle, which means prevent the vehicle from rolling back after the single-track vehicle has stopped.

2. Single-track vehicle according to Claim 1,
**characterized**
**in that** the brake control unit has a vehicle acceleration controller for setting a desired vehicle acceleration by means of an automatic intervention into the brake closed-loop control and/or drive motor open-loop control.

3. Single-track vehicle according to Claim 1 or 2,
**characterized**
**in that** a longitudinal controller is provided for the purpose of actuating the vehicle acceleration controller in accordance with a desired vehicle acceleration, the current vehicle acceleration, the current drive motor torque and the current brake pressure.

4. Single-track vehicle according to one of Claims 1 to 3,
**characterized**
**in that** the means for actively assisting the driver have a device for follow-on or inter-vehicle distance closed-loop control, such as an ACC system, ICC system or AICC system.

5. Single-track vehicle according to one of Claims 1 to 4,
**characterized**
**in that** the means for actively assisting the driver have a device for stop and go closed-loop control.

6. Single-track vehicle according to one of Claims 1 to 5,
**characterized**
**in that** the means for actively assisting the driver have a device for hazard-potential-dependent, automatic conditioning of the brake system.

7. Single-track vehicle according to one of Claims 1 to 6,
**characterized**
**in that** the means for actively assisting the driver have a device for automatic "dry braking" of brake discs of the brake system.

8. Single-track vehicle according to one of Claims 1 to 7,
**characterized**
**in that** means for actively assisting the driver have a device for automatically decelerating the vehicle in order to stabilize the vehicle.

## Revendications

1. Véhicule à voie unique comprenant une unité de régulation de freinage, dans lequel l'unité de régulation de freinage comprend des moyens pour l'assistance active du conducteur par une modification ou une limitation active d'une vitesse du véhicule ou d'une grandeur qui en est dérivée, en particulier d'une accélération du véhicule, et l'unité de régulation de freinage comprend un régulateur de vitesse du véhicule pour le réglage d'une vitesse de véhicule souhaitée au moyen d'une intervention automatique dans la régulation de freinage et/ou dans la commande du moteur d'entraînement, **caractérisé en ce que** les moyens pour l'assistance active du conducteur comprennent un dispositif pour l'assistance au démarrage du véhicule et/ou l'assistance à l'arrêt du véhicule, qui empêchent un recul du véhicule après un arrêt du véhicule à voie unique.

2. Véhicule à voie unique selon la revendication 1, **caractérisé en ce que** l'unité de régulation de freinage comprend un régulateur d'accélération de véhicule, pour le réglage d'une accélération souhaitée du véhicule au moyen d'une intervention automatique dans la régulation de freinage et/ou dans la commande du moteur d'entraînement.

3. Véhicule à voie unique selon la revendication 1 ou 2, **caractérisé en ce qu'**il est prévu un régulateur longitudinal, destiné à commander un régulateur d'accélération de véhicule selon l'indication d'une accélération souhaitée du véhicule, de l'accélération actuelle du véhicule, du couple actuel du moteur d'entraînement et de la pression de freinage actuelle.

4. Véhicule à voie unique selon l'une quelconque des revendications 1 à 3, **caractérisé en ce que** les moyens pour l'assistance active du conducteur comprennent un système pour la régulation de la succession ou de la distance, comme un système ACC, un système ICC, ou un système AICC.

5. Véhicule à voie unique selon l'une quelconque des revendications 1 à 4, **caractérisé en ce que** les moyens pour l'assistance active du conducteur comprennent un système de régulation Stop and Go.

6. Véhicule à voie unique selon l'une quelconque des revendications 1 à 5, **caractérisé en ce que** les moyens pour l'assistance active du conducteur comprennent un système de conditionnement automatique, dépendant du potentiel de danger, du système de freinage.

7. Véhicule à voie unique selon l'une quelconque des revendications 1 à 6, **caractérisé en ce que** les moyens pour l'assistance active du conducteur comprennent un système pour le "freinage à sec" automatique de disques de frein du système de freinage.

8. Véhicule à voie unique selon l'une quelconque des revendications 1 à 7, **caractérisé en ce que** les moyens pour l'assistance active du conducteur comprennent un système de ralentissement automatique du véhicule pour une stabilisation du véhicule.
